(19) Europäisches Patentamt
European Patent Office
Office européen des brevets

(11) Veröffentlichungsnummer: **0 022 882**
**B1**

(12) **EUROPÄISCHE PATENTSCHRIFT**

(45) Veröffentlichungstag der Patentschrift: **15.12.82**

(21) Anmeldenummer: **79200408.7**

(22) Anmeldetag: **20.07.79**

(51) Int. Cl.³: **C 07 C 69/017, C 09 K 3/34, G 02 F 1/13**

(54) **Anisotrope Carbonsäure-4-cyclohexylphenylester und sie enthaltende Flüssigkristallmischungen.**

(43) Veröffentlichungstag der Anmeldung:
**28.01.81 Patentblatt 81/4**

(45) Bekanntmachung des Hinweises auf die Patenterteilung:
**15.12.82 Patentblatt 82/50**

(84) Benannte Vertragsstaaten:
**AT CH DE FR GB**

(56) Entgegenhaltungen:
**keine**

(73) Patentinhaber: **BBC Aktiengesellschaft Brown, Boveri & Cie.
Haselstrasse
CH-5401 Baden (CH)**

(72) Erfinder: **Osman, Maged A., Dr.
Lerchenrain 1
CH-8046 Zürich (CH)**
Erfinder: **Révész, Laszlo, Dr.
Niederrohrdorferstrasse 2
CH-5442 Fislisbach (CH)**

**EP 0 022 882 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Anisotrope Carbonsäure-4-cyclohexylphenylester und sie enthaltende Flüssigkristallmischungen

Die Erfindung betrifft neue anisotrope Verbindungen und Flüssigkristall (FK)-Mischungen, die solche anisotropen Verbindungen enthalten und als Dielektrikum für Flüssigkristallanzeigen verwendet werden.

Anisotrope Verbindungen in Form von p,p'-Dialkylbenzoesäurephenylester der Formel (10)

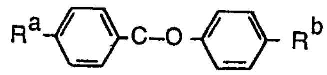
(10)

in der $R^a$ und $R^b$ Alkylreste bedeuten, sind z. B. aus "Flüssigkristall in Tabellen" von D. Demus and H. Zaschke, Leipzig, 1974, bekannt und eignen sich als Komponenten von FK-Mischungen; die Verbindungen (10) besitzen relativ geringe Viskositäten, kleine $\Delta\varepsilon$-Werte (Anisotropie der Dielektrizitätskonstante, ausgedrückt durch die Differenz der DK-Konstanten parallel bzw. senkrecht zur Molekülachse, d. h. $\Delta\varepsilon = \varepsilon_{11} - \varepsilon_{1}$) und kleine $\Delta n$-Werte (Anisotropie der Lichtbrechung, ausgedrückt durch die Differenz der Brechungsindizes parallel bzw. senkrecht zur Molekülachse). Beispielsweise liegen die $\Delta\varepsilon$-Werte von Verbindungen (10) mit $R^a = C_4$—$C_6$-Alkyl und $R^b = C_3$—$C_5$-Alkyl im Bereich von etwa $\pm 0{,}5$, während die entsprechenden $\Delta n$-Werte im Bereich von etwa 0,14 liegen.

Komponenten von FK-Mischungen, die Beiträge im Sinne einer Verminderung von Viskosität und Lichtbrechungsanisotropie der Mischung ohne nachteilige Veränderung der $\Delta\varepsilon$-Werte bewirken, sind für verschiedene Typen bzw. Anwendungsformen von Fk-Anzeigen sehr wünschenswert, auch wenn solche Verbindungen anisotrop im Sinne potentiell flüssigkristalliner Eigenschaften sind, d. h. z. B. monotrop sind und einen nur durch Messung an einer unterkühlten Schmelze oder in Mischung feststellbaren Klärpunkt $T_c$ besitzen. Tatsächlich sind die anisotropen Verbindungen (10) potentiell flüssigkristallin bzw. monotrop.

Aus der DE—OS 2'429'093 sind Cyclohexancarbonsäureester der Formel (20) bekannt

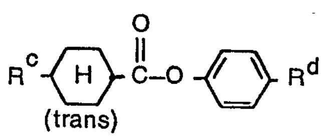
(trans)
(20)

in welcher $R^c$ und $R^d$ Alkylgruppen sind, und die noch kleinere $\Delta n$-Werte haben, als die Verbindungen (10), z. B. im Bereich von $\Delta n \leq 0{,}1$ für $R^c$ = Pentyl und $R^d = C_1$—$C_3$-Alkyl, wobei der $\Delta\varepsilon$-Wert ebenfalls gering ist, d.h. etwa $\pm 0{,}5$ beträgt.

Die $T_c$-Werte (monotrop) der genannten Verbindungen (20) liegen zwar relativ höher (bei ca. 30°C) als die der Verbindungen (10) aber immer noch niedrig. Aus dem Referat von R. Eidenschink et al "Neue FK flüssigkristalline hydroaromatische Verbindungen" (8. Freiburger Arbeitstagung 1978) sind nun Verbindungen der Formeln (30) und (31)

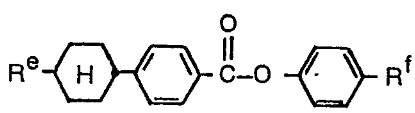
(30)

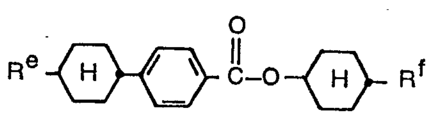
(31)

bekannt geworden, die höhere $T_c$-Werte besitzen, z. B. ca. 130—190°C für Verbindungen (30) mit $R^e$ = Propyl und $R^f = C_1$—$C_3$-Alkyl bzw. ca. 130—160°C für Verbindungen (31) mit $R^e$ = Propyl und $R^f = C_1$—$C_3$-Alkyl.

Die Schmelzpunkte $T_m$ der genannten Verbindungen (30) und (31) sind aber ebenfalls erheblich erhöht.

Hinzu kommt bei den Verbindungen (31) eine durch vier Isomeriemöglichkeiten komplizierte Synthese.

Ziel der Erfindung sind neue anisotrope Verbindungen mit niedrigen $\Delta n$-Werten und geringen $\Delta\varepsilon$-Werten, die gegenüber den bekannten Verbindungen (10), (20), (30) und (31) jeweils spezifische Vorteile haben und dementsprechend als Komponenten für vorteilhaftere FK-Mischungen geeignet sind, insbesondere für nematische Phasen mit niedrigen $\Delta\varepsilon$-Werten, wie sie z. B. für den an sich bekannten Multiplexbetrieb praktisch bedeutsam sind.

Ueberraschenderweise wurde gefunden, dass die den bekannten Verbindungen der Formeln (10), (20), (30) und (31) gemeinsame Paarigkeit der Flügelgruppen $R^a/R^b$, $R^c/R^d$ und $R^e/R^f$ nicht kritisch ist und dass man den jeweils im Formelbild rechten Alkyl-Flügelsubstituenten $R^b$ bzw. $R^d$ durch einen unsubstituierten und daher bezüglich Isomerie unkritischen Cyclohexylrest ersetzen kann.

Die neuen anisotropen Verbindungen gemäss der Erfindung entsprechen der Formel (1)

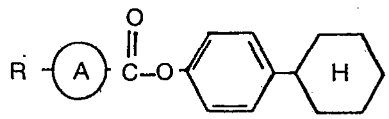

(1)

in der R einen Alkyl- oder Alkoxyrest mit jeweils 1 bis 10 C-Atomen im Alkylteil bedeutet und der Ring A der 1,4-Phenylenrest oder der trans-1,4-Cyclohexylenrest ist.

Verbindungen (1), in welchen R einen Alkylrest, insbesondere mit 1 bis 10 C-Atomen in gerader oder praktisch gerader Kette, bedeutet, stellen eine bevorzugte Gruppe erfindungsgemässer Verbindungen dar.

Spezielle Beispiele erfindungsgemässer Verbindungen (1) sind solche der Formel (2)

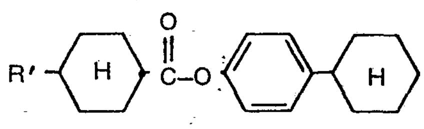

(2)

in welcher R′ gleich R ist und vorzugsweise $C_1$—$C_{10}$-Alkyl bedeutet, sowie solche der Formel (3)

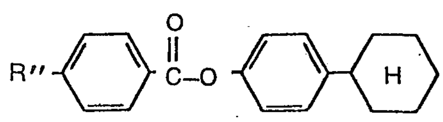

(3)

in welcher R″ = R′.

Erfindungsgemässe FK-Mischungen sind dadurch gekennzeichnet, dass sie als Komponente der FK-Mischung, z. B. in Anteilen von 1 bis 30 Gew.% pro Komponente, mindestens eine Verbindung der Formel (1), insbesondere mindestens eine Verbindung der Formeln (2) oder/und (3) enthalten.

Die erfindungsgemässen Verbindungen (2) können nach an sich bekannten Synthesemethoden z. B. dadurch erhalten werden, dass man die entsprechende 4-Alkyl- bzw. 4-Alkoxybenzoesäure der Formel (4)

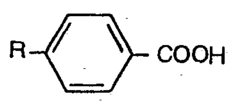

(4)

zur entsprechenden 4-Alkyl- bzw. 4-Alkoxycyclohexancarbonsäure der Formel (5)

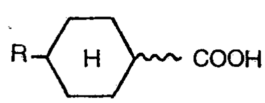

(5)

hydriert, aus dem meist als Mischung von cis- und trans-Isomeren erhaltenen Produkt (5) das trans-Isomere gewinnt, z. B. durch fraktionierte Kristallisation, die erhaltene trans-4-Alkyl- bzw. trans-4-Alkoxycyclohexancarbonsäure in das entsprechende Säurechlorid der Formel (6)

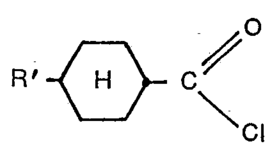

(6)

umwandelt, z. B. mit $SOCl_2$, und die Verbindung (6) mit 4-Cyclohexylphenol der Formel (7)

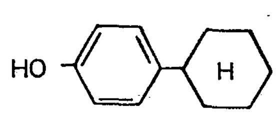

(7)

zur Zielverbindung (2) kondensiert, z. B. in Pyridin oder nach an sich bekannten Veresterungsmethoden.

Die erfindungsgemässen Verbindungen (3) können in ähnlicher Weise wie die Verbindungen (2), aber natürlich unter Wegfall der Hydrierung von (4), d. h. direkt durch Kondensation bzw. Veresterung

des Säurechlorides der Verbindung (4) mit dem Phenol (7) und ohne jedwelche Probleme der Isolation von trans-Isomeren aus entsprechenden cis/trans-Isomerenmischungen erhalten werden.

Zur weiteren Erläuterung der Herstellung erfindungsgemässer Verbindungen (1) dienen die folgenden Beispiele.

Beispiel 1

4-trans-n-Propylcyclohexancarbonsäure (22 g, 130 mM) wurde mit Thionylchlorid (100 ml) 1 Std. unter Rückfluss gekocht. Das entstandene Säurechlorid wurde von überschüssigem Thionylchlorid befreit. Das Säurechlorid wurde zu einer Lösung von 22 g (12,5 mM) 4-Cyclohexylphenol in 100 ml Pyridin zugetropft. Nach Beendigung der Reaktion wurde das Gemisch in überschüssige verdünnte Salzsäure gegossen und mit Methylenchlorid extrahiert.

Das Produkt wurde aus der organischen Phase durch Eindampfen des Lösungsmittels erhalten. Zur Reinigung wurde das Rohprodukt aus Ethanol umkristallisiert, F 161,6°C, $T_c$ 50,8°C (Klärpunkt).

Die erhaltene Verbindung ist nematisch-flüssigkristallin (monotrop) und hat die Formel (2), in der R′ = n-Propyl.

Beispiel 2

4-n-Pentylbenzoesäure (20 g, 100 mM) wurde mit Thionylchlorid (80 ml) 1 Std. unter Rückfluss gekocht. Das überschüssige Thionylchlorid wurde destilliert. Das entstandene Säurechlorid wurde zu einer Lösung von 17,6 g (100 mM) 4-Cyclohexylphenol in 100 ml Pyridin zugetropft. Die Reaktionsmischung wurde über Nacht gerührt und dann auf verdünnte Salzsäure gegossen. Das Produkt wurde mit Methylenchlorid extrahiert. Zur Reinigung wurde das Produkt aus Ethanol umkristallisiert (F 71,6°C; $T_c$ 45,4°C). Die erhaltene Verbindung zeigt eine monotrope nematische Phase und hat die Formel (3), in R″ = n-Pentyl.

Die nach den Beispielen 1 und 2 erhaltenen erfindungsgemässen Verbindungen (1) zeigten $\Delta\varepsilon$-Werte von praktisch Null sowie sehr geringe $\Delta n$-Werte.

Beispiele 3—12

Nach der Arbeitsweise von Beispiel 1 wurden unter Verwendung der entsprechenden Alkylverbindungen (6) folgende Verbindungen der Formel (2) hergestellt:

Beispiel 3: 4-Cyclohexylphenyl-4′-methylcyclohexanoat
4: 4-Cyclohexylphenyl-4′-ethylcyclohexanoat
5: 4-Cyclohexylphenyl-4′-propylcyclohexanoat
6: 4-Cyclohexylphenyl-4′-butylcyclohexanoat
7: 4-Cyclohexylphenyl-4′-pentylcyclohexanoat
8: 4-Cyclohexylphenyl-4′-hexylcyclohexanoat
9: 4-Cyclohexylphenyl-4′-heptylcyclohexanoat
10: 4-Cyclohexylphenyl-4′-octylcyclohexanoat
11: 4-Cyclohexylphenyl-4′-nonylcyclohexanoat
12: 4-Cyclohexylphenyl-4′-decylcyclohexanoat

Beispiele 13—22

Nach der Arbeitsweise von Beispiel 2 wurden unter Verwendung der entsprechenden Alkylverbindungen der Formel (4) folgende Verbindungen der Formel (3) hergestellt:

Beispiel 13: 4-Cyclohexylphenyl-4′-methylbenzoat
14: 4-Cyclohexylphenyl-4′-ethylbenzoat
15: 4-Cyclohexylphenyl-4′-propylbenzoat
16: 4-Cyclohexylphenyl-4′-butylbenzoat
17: 4-Cyclohexylphenyl-4′-pentylbenzoat
18: 4-Cyclohexylphenyl-4′-hexylbenzoat
19: 4-Cyclohexylphenyl-4′-heptylbenzoat
20: 4-Cyclohexylphenyl-4′-octylbenzoat
21: 4-Cyclohexylphenyl-4′-nonylbenzoat
22: 4-Cyclohexylphenyl-4′-decylbenzoat

Beispiele 23—32

Nach der Arbeitsweise von Beispiel 1 wurden unter Verwendung der entsprechenden Alkoxyverbindungen (6) folgende Verbindungen der Formel (2) hergestellt:

Beispiel 23: 4-Cyclohexylphenyl-4′-methoxycyclohexanoat
24: 4-Cyclohexylphenyl-4′-ethoxycyclohexanoat
25: 4-Cyclohexylphenyl-4′-propoxycyclohexanoat
26: 4-Cyclohexylphenyl-4′-butoxycyclohexanoat
27: 4-Cyclohexylphenyl-4′-pentyloxycyclohexanoat
28: 4-Cyclohexylphenyl-4′-hexyloxycyclohexanoat
29: 4-Cyclohexylphenyl-4′-heptyloxycyclohexanoat

30: 4-Cyclohexylphenyl-4'-octyloxycyclohexanoat
31: 4-Cyclohexylphenyl-4'-nonyloxycyclohexanoat
32: 4-Cyclohexylphenyl-4'-decyloxycyclohexanoat

Beispiele 33—42

Nach der Arbeitsweise von Beispiel 2 wurden unter Verwendung der entsprechenden Alkoxyverbindungen der Formel (4) folgende Verbindungen der Formel (3) hergestellt:

Beispiel 33: 4-Cyclohexylphenyl-4'-methoxybenzoat
34: 4-Cyclohexylphenyl-4'-ethoxybenzoat
35: 4-Cyclohexylphenyl-4'-propoxybenzoat
36: 4-Cyclohexylphenyl-4'-butoxybenzoat
37: 4-Cyclohexylphenyl-4'-pentyloxybenzoat
38: 4-Cyclohexylphenyl-4'-hexyloxybenzoat
39: 4-Cyclohexylphenyl-4'-heptyloxybenzoat
40: 4-Cyclohexylphenyl-4'-octyloxybenzoat
41: 4-Cyclohexylphenyl-4'-nonyloxybenzoat
42: 4-Cyclohexylphenyl-4'-decyloxybenzoat

Die Verbindungen der Formel (1) können aufgrund ihrer geringen Viskosität, kleinen $\Delta\varepsilon$- und kleinen $\Delta n$-Werten mit besonderen Vorteilen als Komponente nematischer Phasen für Anzeigezellen mit Multiplexbetrieb, aber auch für andere Betriebsarten bzw. FK-Anzeigezellen verwendet werden, bei welchen eine geringe Viskosität sowie kleine $\Delta\varepsilon$- und $\Delta n$-Werte bedeutsam sind. Dabei kann eine einzelne Verbindung (1) jeweils in einem Anteil bis zu etwa 30% in der erfindungsgemässen FK-Mischung enthalten sein. Bei Verwendung mehrerer Verbindungen (1) können diese Anteile addiert werden, d. h. die erfindungsgemässe FK-Mischung hauptsächlich, überwiegend oder praktisch vollständig aus Verbindungen (1) bestehen.

**Patentansprüche**

1. Anisotrope Verbindungen der Formel (1)

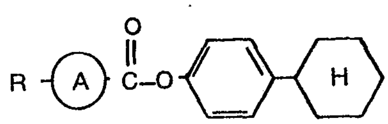

(1)

in der R einen Alkyl- oder Alkoxyrest mit jeweils 1 bis 10 C-Atomen und der Ring A den 1,4-Phenylen- oder den trans-1,4-Cyclohexylenring bedeutet.

2. Verbindungen nach Patentanspruch 1 der Formel (2)

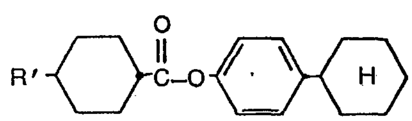

(2)

in der R' einen Alkylrest mit 1 bis 10 C-Atomen bedeutet.

3. Verbindungen nach Patentanspruch 1 der Formel (3)

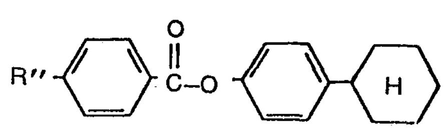

(3)

in der R'' einen Alkylrest mit 1 bis 10 C-Atomen bedeutet.

4. Flüssigkristallmischung, dadurch gekennzeichnet, dass die Mischung als Komponente mindestens eine Verbindung der Formel (1)

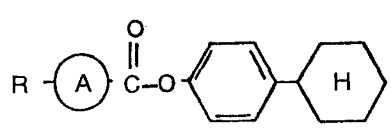

(1)

enthält, in der R einen Alkyl- oder Alkoxyrest mit jeweils 1 bis 10 C-Atomen und der Ring A den 1,4-Phenylen- oder den trans-1,4-Cyclohexylenring bedeutet.

**Revendications**

1. Composés anisotropes de formule (I):

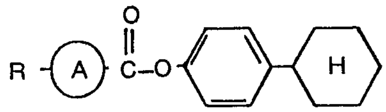

où R représente un radical alcoyle ou alcoxy comptant chacun 1 à 10 atomes de carbone et le cycle A représente le cycle 1,4-phénylène ou trans-1,4-cyclohexylène.

2. Composés suivant la revendication 1 de formule (2):

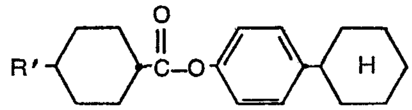

où R′ représente un radical alcoyle de 1 à 10 atomes de carbone.

3. Composés suivant la revendication 1 de formule (3):

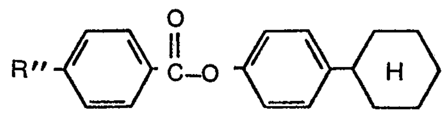

où R″ représente un radical alcoyle de 1 à 10 atomes de carbone.

4. Mélange de cristaux liquides, caractérisé en ce que le mélange comprend, comme constituant, au moins un composé de formule (1):

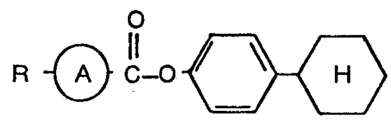

où R représente un radical alcoyle ou alcoxy comptant chacun 1 à 10 atomes de carbone et le cycle A représente le cycle, 1,4-phénylène ou trans-1,4-cyclohexylène.

**Claims**

1. Anisotropic compounds of the formula (1)

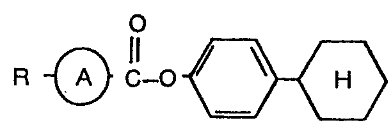

(1)

in which R is an alkyl or alkoxy radical each having 1 to 10 C atoms and the ring A is a 1,4-phenylene ring or a trans-1,4-cyclohexylene ring.

2. Compounds according to Patent Claim 1, of the formula (2)

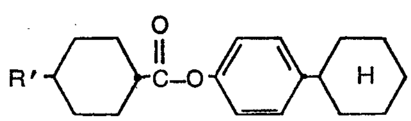

(2)

in which R′ is an alkyl radical having 1 to 10 C atoms.

3. Compound according to Patent Claim 1, of the formula (3)

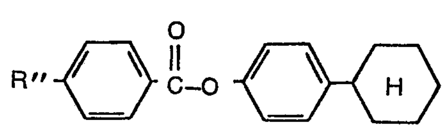

(3)

in which R″ is an alkyl radical having 1 to 10 C atoms.

4. Liquid crystal mixture, characterised in that the mixture contains, as a component, at least one compound of the formula (1)

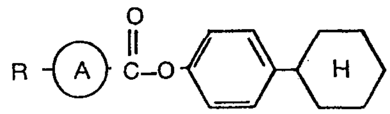

(1)

in which R is an alkyl or alkoxy radical each having 1 to 10 C atoms and the ring A is a 1,4-phenylene ring or a trans-1,4-cyclohexylene ring.